# EUROPEAN PATENT APPLICATION

(11) **EP 3 073 191 A1**
(43) Date of publication of application: **28.09.2016**
(21) Application number: 14864732.4
(22) Date of filing: 26.01.2014
(51) Int. Cl.: F21V 33/00

(54) **ELECTRIC CONTROL BOX PROVIDED WITH LED ILLUMINATING LAMP, AND MANUFACTURING METHOD THEREFOR**

(30) Priority: 20.11.2013 CN 201310590842
(71) Applicant: Guangzhou Micro Welding Equipment Co., Ltd., Guangdong 510385 (CN); Yang, Shilang, New York, New York 11204 (US)
(72) Inventor: YANG, Shilang, New York, New York 11204 (US); YANG, Shitong, Guangzhou City Guangdong 510646 (CN); YANG, Kemin, New York New York 11204 (US); YANG, Cheng, Guangzhou City Guangdong 510646 (CN)
(74) Representative: Blake, Michael Edward
(86) International application number: PCT/CN2014/071454
(87) International publication number: WO 2015/074344

(57) **Abstract**

The present invention provides an electrical box having LED night lamp including an electrical box capable of being assembled to a wall and a LED night lamp assembled to the electrical box. The LED night lamp includes a circuit board having a switch and a LED point light electrically connected thereto. The circuit board is electrically connected to a mains supply wire. The electric connection of the circuit board and the mains supply wire is hidden in the electrical box. The electrical box according to the present invention fully utilizes the structure, the installation location, the safety performance, the quality and the distribution channels of the conventional electrical boxes. The LED night lamp is installed during the installation of the electrical box. The installation cost of the LED night lamp is greatly reduced, which can unexpectedly promote the environmentally friendly and energy-saving green lighting.

## Description

### FIELD OF THE INVENTION

The present invention generally relates to lighting devices and, more particularly, to an electrical box having LED night lamp and method for manufacturing the same.

### BACKGROUND OF THE INVENTION

Electrical boxes and lighting lamps are common electrical appliances in our daily life. At present, an electrical box and a lighting lamp are installed independently. Therefore, the electrical box and the lighting lamp need to be bought and installed independently. In absence of contrary instructions, the electrical box described in the present invention refers to a power box having an electrical switch and/or an electrical socket which can be installed in a house wall.

Lighting can be generally divided into working lighting and general lighting or night lighting. Working lighting generally needs high brightness illumination as day light and consumes more energy. General lighting or night lighting refers to low brightness illumination outside of work or low brightness illumination more than 10 hours in the evening. General lighting or night lighting still has great improvement space in energy saving and environmental protection.

At present, night lamps in some houses and public places generally adopt fluorescent lamps as working lighting lit up all night long, which may lead to waste of energy.

In recent years, with the rapid development of LED lighting technology, the brightness and lifespan of LED night lamps have been improved remarkably. LED night lamps not only can meet the requirements of lighting in the night, but also can act as an ordinary lighting. As a low-carbon green lighting, LED night lamps have been widely sold in the market under state support. However, due to high price, it is still difficult to prompt LED night lamps. A LED night lamp uses direct current power supply of 3V. However, the mains supply is generally an alternating current power supply of 110/220V. Therefore, each LED night lamp must be equipped with a circuit board having a rectifier and voltage regulator. In this regard, the conventional LED night lamp each must be provided with a lamp holder for packaging the LED night lamp and a lamp house. Therefore, it is very difficult to prompt LED night lamps due to the high cost of LED night lamps, such as the installation cost and the distribution cost.

In view of the above, what is needed, therefore, is to provide an economical and practical electrical box having LED night lamp and method for manufacturing the same.

### SUMMARY OF THE INVENTION

One object of the present invention is to provide an economical and practical electrical box having LED night lamp and method for manufacturing the same, which can provide a new way for the promotion of low-carbon energy saving green lighting.

According to one embodiment of the present invention, an electrical box having LED night lamp includes an electrical box capable of being assembled to a wall and a LED night lamp assembled to the electrical box. The LED lamp includes a circuit board having a switch and a LED point light electrically connected thereto. The circuit board is electrically connected to a mains supply wire. The electric connection of the circuit board and the mains supply wire is hidden in the electrical box.

According to one aspect of the present invention, the electric connection between the LED point light and the circuit board and the electric connection between the switch and the circuit board are both hidden in the electrical box.

According to one aspect of the present invention, the electrical box is provided with one or more mounting hole for receiving the LED point light.

According to one aspect of the present invention, the switch of the LED night lamp is a manual switch or an optical switch.

According to one aspect of the present invention, the electrical box is formed with a frame capable of being assembled to the wall and a front cover coupled to the frame, the frame is formed with a wire holder connected to the mains supple wire, and the front cover is formed with an electrical switch and/or an electrical socket.

According to one aspect of the present invention, the frame defines a mounting slot and the circuit board of the LED night lamp is suitably clamped in the mounting slot.

Compared with the prior art, the electrical box having LED night lamp of the present invention has the following advantages.

Firstly, a conventional LED night lamp generally includes a main body including a light holder and a light house. The electrical box according to the present invention adopts the electrical box as the main body. The LED point light, the circuit board of the LED night lamp and the switch of the LED night lamp are all hidden in the electrical box. There is no need to provide a light holder and a light house as being provided in a conventional LED night lamp. The electrical box of the present invention not only has the functions of a conventional electrical box, but also can acts a LED night lamp.

Secondly, because a position suitable for the installation of an electrical box is always a position where a night lamp can be installed, the LED night lamp is installed during the installation of the electrical box. Therefore, supporting material and labor cost for installing the LED night lamp can be saved.

Thirdly, due to the quality and safety performance of conventional electrical boxes as well as the distribution channels of the conventional electrical boxes, the cost of marketing is saved.

According to estimate, the selling price of a 1w conventional LED night lamp is about RMB40.00. The total cost including the supporting material and the labor cost is about RMB300.00. However, according to the electrical box of the present invention, the cost for installing the LED night lamp is only about RMB15.00. Therefore, the electrical box having LED night lamp of the present invention can remarkably reduce the cost for installing the LED night lamp.

According to another embodiment of the present invention, a method for manufacturing the electrical box having LED night lamp includes the steps of:
1) preparing an electrical box;
2) assembling a LED night lamp to the electrical box; and
3) checking quality of the electrical box having LED night lamp and packaging the electrical box having LED night lamp.

According to one aspect of the present invention, in the step of assembling the LED night lamp to the electrical box, the electric connection of the circuit board of the LED night lamp and the mains supply wire is hidden in the electrical box.

Compared with the prior art, the method for manufacturing the electrical box having LED night lamp of the present invention has the following advantages.

Firstly, conventional LED night lamp generally includes a main body including a light holder and a light house. The present invention adopts the electrical box as the main body of the LED night lamp. The light holder and the light house of the conventional LED night lamp are omitted. The cumbersome process for preparing the light holder and the light house are also omitted. The LED night lamp almost cannot be seen from the outside of the electrical box.

Secondly, the electric connection of the LED night lamp and the mains supply wire is hidden in the electrical box according to the present invention. The electric connection is safe and reliable. The exposed LED point light, the optical switch and/or the manual switch each use a safe voltage of 3V. Due to the quality and the safety performances of the conventional electrical box, the electrical box according to the present invention is certificated to various safety certifications, such as the electrical safety certification. Therefore, there is no need to certificate electrical safety certification, for instance the 3C certification, the UL certification and the CE certification.

Thirdly, a building is generally required to install an electrical box when install various kinds of electrical appliances. The electrical box having LED night lamp according to the present invention can realize the installation of the electrical box and the LED night lamp at the same time, which not only can remarkably reduce the installation costs, but only can provide a convenient new way for the promotion of LED lighting, and further obtain unexpected effect on the promotion of the low-carbon energy saving green lighting.

Other advantages and novel features will be drawn from the following detailed description of preferred embodiments with the attached drawings. The accompanying drawings, which are incorporated in and constitute a part of this specification, illustrate embodiments of the present invention and, together with a general description of the invention given above, and the detailed description of the embodiments given below, serve to explain the principles of the invention:

### BRIEF DESCRIPTION OF THE DRAWINGS

Fig. 1 depicts an exemplary perspective view of an electrical box having LED night lamp according to one embodiment of the present invention; and
Fig. 2 depicts an exemplary perspective view of the electrical box having LED night lamp of Fig. 1, showing the inner structure of the electrical box.

### DETAILED DESCRIPTION OF THE INVENTION

Example embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout.

It should be understood that, the electrical box in the present invention refers to an power box having a switch and/or an electrical socket capable of being assembled to a wall of a house, especially a house wall where the power box can be conveniently operated, such as close to the side of the door, the aisle of the corridor, close to the stairs, close to the elevator door where the night lamp can be installed. The electrical box and the wires are basic materials for installing various electrical appliances in a building. Consequently, the electrical box and the wires must have desirable quality and safety performance. The electrical box is required to have been certificated to quality and safety certification of electrical sector, fire sector as well as construction sector. The electrical box enters the market via the distribution channels of the basic materials of the electrical appliances.

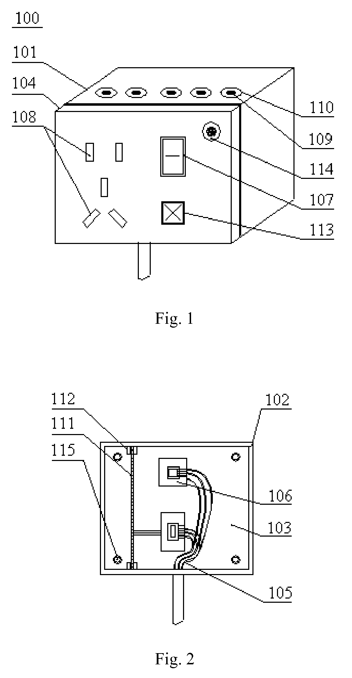

Referring to Figs. 1 and 2, the electrical box having LED night lamp according to one embodiment of the present invention includes an electrical box 100 capable being assembled to a wall and a LED night lamp assembled to the electrical box 100. The LED night lamp includes a circuit board 111, a switch and a LED point light 110 electrically connected to the circuit board 111. The circuit board 111 is electrically connected to a mains supply wire 105 via a wire holder 106. The electric connection of the circuit board 111 and the mains supply wire is hidden in the electrical box 100.

Referring to Fig. 1, the electrical box 100 includes a frame 101 which can be assembled to a wall of a house and a front cover 104 assembled to the frame 101. The frame 101 defines one or more mounting holes 109 for receiving a LED point light 110 at a top side thereof. The frame 101 includes a base 103 which can be fixed to the wall of the house and four side walls 102 extending upwardly from the base 103. The base 102 and the four side walls 102 jointly define a chamber. The wire holder 106 for electric connection with the mains supply wire 105 is seated in the chamber.

In the embodiment as illustrated, the frame 101 defines a pair of mounting slots 112 for mounting of the circuit board 111. The circuit board 111 is clamped in the mounting slots 112, to realize rectifier, reduction voltage and voltage stabilization of the LED night lamp. According to other embodiment of the present invention, the circuit board 111 can also be fixed in the electrical box 100 in other means.

The front cover 104 is tightly coupled to the frame 101, to ensure the safety performance of the electrical box 100. The front cover 104 is formed with an electric switch 107 and/or an electric socket 108. The electric switch 107 and/or the electric socket 108 can be electrically connected to the mains supply wire 105 via conventional means in the prior art, and will not be detailed in the description.

The LED night lamp includes a LED point light 110 mounted in the mounting hole 109, a circuit board 111 and an electric switch. According to other embodiment of the present invention, the mounting hole 109 can be defined in other suitable positions of the electrical box 100.

The switch is provided on the front cover 104 and in electric connection with the circuit board 111 and the LED point light 110. The switch can be a manual switch 113 or an optical switch 114. According to other embodiments of the present invention, the electric switch can also be mounted in the outer wall of the electrical box 100 or other suitable positions of the electrical box 100.

According to a preferable embodiment of the present invention, the electric connection between the circuit board 111 and the mains supply wire 105 is hidden in the electrical box 100. The electric connection of the LED point light 110 and the circuit board 111, the electric connection of the switch and the circuit board 111 are both hidden in the electrical box 100. Therefore, the original components in the electrical box 100 can be maintained in the electrical box 100, and the LED night lamp can hardly be seen from the outside.

The method for manufacturing the electrical box having LED night lamp will be detailed as following. It should be understood that, since the process for disposing electric switch and/or electric socket in the electrical box is well known to one ordinary skilled in the art, it will not be detailed in the present invention. The present invention will only describe the process for assembling a LED night lamp to the electrical box. The method for manufacturing the electrical box having LED night lamp according to one embodiment of the present invention includes the steps of:
1. Process for preparing an electrical box: The LED point light 110 can be a point light having a diameter of 5mm, or a point light having a diameter of 3mm. The circuit board 111 of the LED night lamp has a size of 30mm*50mm. Therefore, the electrical box 100 has adequate space to receive the LED point light 110, the circuit board 110 and the switch. The mounting hole 109 is defined in a top side of the sidewall of the electrical box 100. The circuit board 111 is mounted in the electrical box 100. A through hole having a diameter of 3mm is defined in the front cover 104 of the electrical box 100 for mounting an optical switch.
   If a manual switch for the LED night lamp is needed, a mounting hole (not shown) can also be provided.
   Since the housing of the conventional electrical box is generally obtained via injection molding of plastic, the mounting holes 109 for receiving the LED point lights, the mounting hole for receiving the optical switch, the mounting hole for receiving the manual switch, and the mounting slot 112 for clamping the circuit board 111 can be pre-formed during the injection molding of the plastic material. Therefore, the process for pre-forming the electrical box 100 is very simple.
   Referring to Figs. 1 and 2, the frame 101 is formed with a wire holder 106 which can be electrically connected to a mains supply wire 105. The front cover 104 is formed with a switch 107 and/or an electric socket 108. The side wall of the frame 101 is pre-formed with an array of mounting holes 109 for mounting the LED point light 110. The frame 104 is provided with a mounting slot 112 for fixing the circuit board 111 via clamping. The front cover 104 is provided with a mounting hole having a diameter of about 3mm for receiving the optical switch 114 and another mounting hole for receiving the manual switch 113 for individual control of the LED night lamp. The base 103 defines a number of screw holes 115 at four corners thereof for fixing the electrical box 100 to the wall.
   It can be clearly seen from Fig. 1, the LED night lamp almost cannot be seen from the outside of the electrical box having LED night lamp according to the present invention. Therefore, the electrical box having LED night lamp of the present invention can also be called electrical box having invisible LED night lamp.
2. Process for assembling the LED night lamp: process for assembling the LED night lamp includes the steps of: hiding the electric connection of the mains supply wire 105 and the circuit board 111 in the electrical box 100; and connecting the LED point light 110, the optical switch 114 and/or the manual switch 113 to the circuit board 111 respectively. Since the LED point light 110, the optical switch 114 and/or the manual switch 113 have been designed appropriately, the assembly and electric connection are safe, reliable and simple.
3. Process for checking quality and packaging: after reliability test of power on and power off to the LED night lamp, the frame 101 and the front cover 104 of the electrical box 100 are coupled to each other. The assembled electrical box having LED night lamp of the present invention can enter the market via the distribution channels of conventional electrical box 100.

In view of the detailed description of the embodiments of the present invention, the electrical box having LED night lamp of the present invention has the following advantages.

Firstly, the lamp holder and the lamp housing of a conventional LED night lamp are omitted. Therefore, the cumbersome process for preparing the lamp holder and the lamp housing are also omitted. The LED night lamp almost cannot be seen from the outside of the electrical box.

Secondly, the electric connection of the LED night lamp and the mains supply wire is hidden in the electrical box in the present invention. The electric connection is safe and reliable. The exposed LED point light, the optical switch and/or the manual switch each uses a safe voltage of 3V. Due to the quality and safety performance of the conventional electrical box, the electrical box of the present invention is certificated to various safety certifications, including electrical safety certification. There is no need to certificate electrical safety certification, such as 3C certification, UL certification and CE certification.

Thirdly, a building is generally required to install an electrical box when install various kinds of electrical appliances. The electrical box having LED night lamp in accordance with the present invention can realize the installation of the electrical box and the LED night lamp at the same time, which not only can reduce the installation cost remarkably, but only can provide a convenient new way for promotion of LED lighting, and further obtain unexpected technical effect on the promotion of the low-carbon energy saving green lighting.

It should be understood that, in the electrical box having LED night lamp as shown in Figs. 1 and 2, the LED night lamp is assembled to the control switch and the electrical socket of the electrical appliances. However, according to other embodiments of the present invention, the LED night lamp can also be assembled to an electrical box only having a switch, or be assembled to an electrical box only having an electrical socket, or be assembled to another electrical box for other purposes.

While the present invention has been illustrated by the above description of the preferred embodiments thereof, while the preferred embodiments have been described in considerable detail, it is not intended to restrict or in any way limit the scope of the appended claims to such details. Additional advantages and modifications within the spirit and scope of the present invention will readily appear to those skilled in the art. Therefore, the present invention is not limited to the specific details and the illustrative examples shown and described.

## Claims

1. An electrical box having LED night lamp, comprising:
an electrical box capable of being assembled to a wall; and
a LED night lamp assembled to the electrical box,
**characterized in that** the LED night lamp comprises a circuit board having a switch and a LED point light electrically connected thereto, the circuit board is electrically connected to a mains supply wire, and an electric connection of the circuit board and the mains supply wire hidden in the electrical box.

2. The electrical box of claim 1, **characterized in that** the electric connection of the LED point light and the circuit board and the electric connection of the switch and the circuit board are both hidden in the electrical box.

3. The electrical box of claim 1, **characterized in that** the electrical box defines one or more mounting hole for receiving the LED point light.

4. The electrical box of claim 1, **characterized in that** the switch of the LED night lamp is a manual switch or an optical switch.

5. The electrical box of anyone of claims 1 to 4, **characterized in that** the electrical box is formed with a frame capable being assembled to the wall and a front cover coupled to the frame, the frame is formed with a wire holder connected to the mains supple wire, and the front cover is formed with an electrical switch and/or an electrical socket.

6. The electrical box of claim 5, **characterized in that** the frame defines a mounting slot and the circuit board of the LED night lamp is suitably received in the mounting slot.

7. A method for manufacturing the electrical box having a LED night lamp of anyone of claims 1 to 6, **characterized in that** the method comprising the steps of:
1) preparing the electrical box;
2) assembling the LED night lamp to the electrical box; and
3) checking quality of the electrical box having LED night lamp and packaging the electrical box having LED night lamp.

8. The method of claim 7, **characterized in that** in the step of assembling the LED night lamp to the electrical box, the electric connection of the circuit board and the mains supply wire is hidden in the electrical box.
